# FASCICULE DE BREVET EUROPEEN

(11) **EP 3 159 529 B1**
(45) Date de publication et mention de la délivrance du brevet: **31.10.2018**
(21) Numéro de dépôt: 16171667.5
(22) Date de dépôt: 27.05.2016
(51) Int. Cl.: F02M 35/16, B60R 21/34, F16B 2/08, F16B 2/10, F02M 35/10, F16L 55/10, F15B 1/00, F16L 55/00, F16L 55/033

(54) **DISPOSITIF D'ALIMENTATION D'AIR MOTEUR**
LUFTZUFÜHRUNGSVORRICHTUNG EINES MOTORS
ENGINE AIR SUPPLY DEVICE

(30) Priorité: 29.05.2015 FR 1554907
(43) Date de publication de la demande: 26.04.2017
(73) Titulaire: NOVARES FRANCE, 92140 Clamart (FR)
(72) Inventeur: QUEVALLIER, Jean-Claude, 59810 LESQUIN (FR); CHOCQUET, Jean-François, 62790 LEFOREST (FR); WAYMEL, Gilles, 62410 HULLUCH (FR)
(74) Mandataire: Delorme, Nicolas

(56) Documents cités:
- EP-A1- 1 844 994
- DE-A1-102013 020 068
- FR-A1- 2 913 462
- JP-A- 2003 314 390
- US-A1- 2006 234 619
- "COLLIERS DE SERRAGE ET DE FIXATION", , 31 mars 2009 (2009-03-31), XP055263115, Extrait de l'Internet: URL:http://www.transflex.fr/catalogues.php [extrait le 2016-04-06]
- "Colliers de serrage", , 31 janvier 2012 (2012-01-31), XP055262619, Extrait de l'Internet: URL:http://www.ace.sa.com [extrait le 2016-04-04]

## Description

La présente invention concerne un dispositif escamotable d'alimentation d'air moteur.

Actuellement, les compartiments moteurs des véhicules automobiles présentent souvent un volume de sécurité vide de tout élément rigide. Ce volume correspond à une zone de déformation du capot moteur en cas de collision avec un piéton. Ce volume est limité en partie supérieure par la peau intérieure du capot et en partie inférieure par une surface parallèle à la peau intérieure du capot et qui lui est distante d'environ 60 millimètres. Seuls des éléments capables de s'écraser en cas de collision avec un piéton peuvent empiéter dans ce volume de sécurité.

Les moteurs des véhicules automobiles doivent être alimentés en air pour fonctionner. Pour cela, on utilise un tuyau d'alimentation d'air connecté au moteur, ou à un compresseur, et dans lequel l'air est aspiré. Ainsi, le tuyau d'alimentation d'air est soumis à une dépression intérieure, avant l'éventuel compresseur.

Traditionnellement, le tuyau d'alimentation d'air est réalisé dans un matériau rigide qui permet au tuyau de résister aux efforts d'écrasement dus à la dépression intérieure. Cependant, la rigidité du matériau utilisé interdit l'implantation du tuyau d'alimentation d'air dans le volume de sécurité, ce qui rend l'implantation du tuyau difficile. Ainsi, il peut être nécessaire d'allonger le parcours du tuyau ou de réduire la section du tuyau. Ces deux solutions augmentent les pertes de charge de la ligne d'admission d'air, ce qui est préjudiciable à la puissance et au rendement du moteur.

Une autre solution consiste à réaliser le tuyau d'admission d'air dans un matériau élastomère. Cependant cette solution n'est pas satisfaisante, car les propriétés mécaniques des matériaux élastomères varient énormément selon la température. Ainsi, un tuyau dimensionné pour résister à une dépression interne à haute température, deviendra excessivement rigide à très basse température. Or, le tuyau d'admission d'air doit pouvoir fonctionner sur une large plage de températures. De même, si le tuyau d'admission d'air pénètre dans le volume de sécurité, sa souplesse doit être garantie sur un vaste intervalle de températures.

Par ailleurs, des dispositifs d'alimentation d'air moteur pour un véhicule conformes au préambule de la revendication 1 sont connus des demandes de brevet EP 1 844 994 A1, JP 2003 314390 A, DE 10 2013 020068 A1 et US 2006/234619 A1.

En conséquence, la présente invention a pour objectif de fournir un dispositif d'admission d'air qui puisse être positionné dans le volume de sécurité d'un véhicule en résistant à une dépression intérieure, en permettant une admission d'air optimale du moteur et en garantissant la sécurité en cas de collision du véhicule avec un piéton.

L'invention concerne un dispositif d'alimentation d'air moteur pour un véhicule selon la revendication 1.

Le fait que le tuyau est au moins partiellement souple permet de positionner le dispositif dans le volume de sécurité, et garantit l'écrasement du dispositif en cas de collision du véhicule avec un piéton. Les moyens de conformation permettent au tuyau de résister à une dépression intérieure sans se déformer et permettent ainsi une alimentation d'air optimale du moteur. Les moyens de déverrouillage permettent de libérer le tuyau des moyens de conformation, en cas de collision du véhicule avec un piéton, sous l'action d'un effort extérieur exercé par exemple par le capot. Du coup, le tuyau peut s'écraser pour garantir la sécurité d'un piéton percuté par le véhicule.

Ainsi, d'une manière particulièrement avantageuse, la synergie entre le tuyau, les moyens de conformation et les moyens de déverrouillage, permet au dispositif selon l'invention d'être positionné dans le volume de sécurité en résistant à une dépression intérieure, en permettant une admission d'air optimale du moteur et en garantissant la sécurité en cas de collision du véhicule avec un piéton.

De même, cette configuration permet d'améliorer l'accessibilité à d'autres organes du véhicule, tels que des moyens de fixations (comme par exemple des vis ou des clips) qui se trouveraient positionnés derrière le tuyau en position fonctionnelle.

Le tuyau peut présenter une section déformée permettant au tuyau de ne pas empiéter dans le volume de sécurité.

Ainsi la conformation de la section de repos elliptique en une section de contrainte circulaire, augmente la résistance du tuyau aux efforts dus à une dépression intérieure.

Le tuyau peut comprendre au moins une portion rigide.

Selon une disposition particulière, le tuyau peut présenter une section de repos sensiblement elliptique.

Ainsi, lors d'un choc, le tuyau peut aisément adopter une section déformée écrasée.

La coopération de chaque languette avec un réceptacle permet de relier, de manière amovible, deux demi-colliers pour conformer le tuyau tout en permettant la séparation rapide des demi-colliers pour libérer le tuyau en cas de collision avec un piéton.

Chaque languette peut présenter au moins une protubérance adaptée pour coopérer avec une empreinte correspondante de chaque réceptacle.

Chaque demi-collier peut être déformable élastiquement entre une position libre et une position de contrainte dans laquelle chaque demi-collier enserre une portion de la section du tuyau pour la contraindre à adopter la section fonctionnelle.

La déformation élastique de chaque demi-collier permet de favoriser la libération du tuyau en cas de collision du véhicule avec un piéton.

Chaque bras de chaque demi-anneau peut présenter au moins une lamelle configurée pour être introduite dans un réceptacle pour y maintenir verrouillée une languette.

D'une manière avantageuse, le retrait de la lamelle du réceptacle permet de séparer les demi-colliers et ainsi de libérer le tuyau.

L'organe de déclenchement peut comprendre un bouton de commande situé entre les deux bras de chaque demi-anneau, articulé par rapport à chacun des deux bras et permettant de libérer chaque demi-collier pour permettre au tuyau d'adopter une section déformée.

Chaque demi-collier peut présenter une rainure configurée pour recevoir un demi-anneau.

Selon un mode de réalisation, les moyens de conformation peuvent comprendre un cordon souple configuré pour solidariser les moyens de conformation au tuyau.

D'autres caractéristiques et avantages de la présente invention se dégageront de la description qui va suivre, en regard des dessins annexés qui représentent plusieurs formes de réalisation de l'invention.
- La figure 1 est une vue en perspective d'un dispositif selon un premier mode de réalisation de l'invention, en position de libération ;
- La figure 2 est une vue en perspective d'un dispositif selon un premier mode de réalisation de l'invention, en position de contrainte ;
- La figure 3 est une vue en perspective d'un dispositif selon un deuxième mode de réalisation de l'invention ;
- La figure 4 est une vue de coté d'un dispositif selon un troisième mode de réalisation non-couvert par l'invention, en position de contrainte ;
- La figure 5 est une vue de coté d'un dispositif selon un troisième mode de réalisation non-couvert par l'invention, lors de l'exercice d'un effort sur les moyens de déverrouillage ;
- La figure 6 est une vue de coté d'un dispositif selon un troisième mode de réalisation non-couvert par l'invention, en position de libération ;
- La figure 7 est une vue, en coupe, de face d'un dispositif selon un quatrième mode de réalisation non-couvert par l'invention ;
- La figure 8 est une vue de coté d'un dispositif selon un quatrième mode de réalisation non-couvert par l'invention, en position de contrainte ;
- La figure 9 est une vue de coté d'un dispositif selon un quatrième mode de réalisation non-couvert par l'invention, lors de l'exercice d'un effort sur les moyens de déverrouillage ;
- La figure 10 est une vue de coté d'un dispositif selon un quatrième mode de réalisation non-couvert par l'invention, en position de libération ;
- La figure 11 est une vue en perspective d'un dispositif selon un cinquième mode de réalisation non-couvert par l'invention ;
- La figure 12 est une vue détaillée, en perspective et en coupe partielle, des moyens de déverrouillage d'un dispositif selon un cinquième mode de réalisation non-couvert par l'invention ;
- La figure 13 est une vue en perspective d'un dispositif selon un sixième mode de réalisation non-couvert par l'invention, en position de contrainte ;
- La figure 14 est une vue en perspective d'un dispositif selon un sixième mode de réalisation non-couvert par l'invention, en position de libération ;
- La figure 15 est une vue schématique de la section d'un tuyau souple, selon un mode de réalisation de l'invention, dans plusieurs états.
- La figure 16 est une vue schématique de la section d'un tuyau comprenant des portions rigides, selon un mode de réalisation de l'invention, dans plusieurs états.

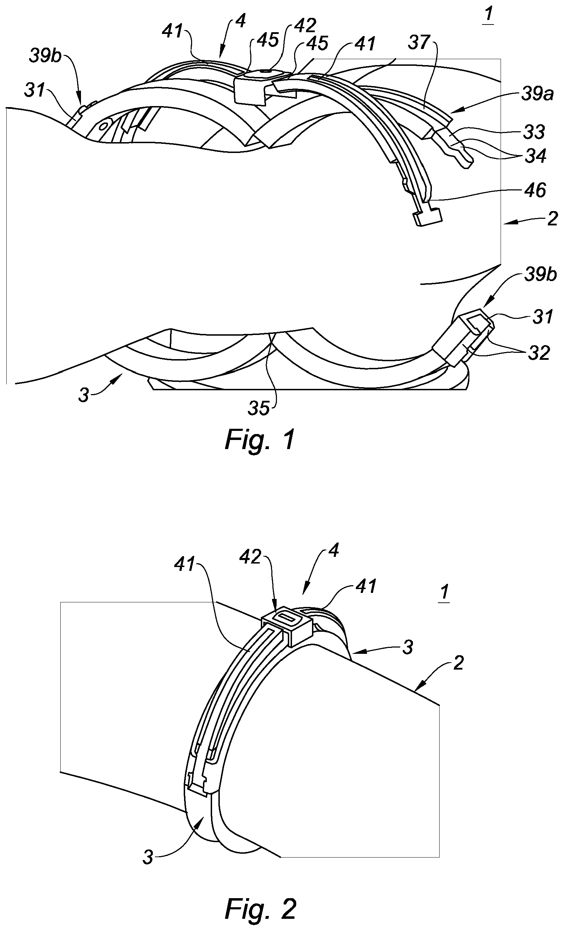

Comme on peut l'observer sur les figures 1 à 16, le dispositif 1 comprend un tuyau 2. Le tuyau 2 peut être réalisé avec un matériau élastomère choisi pour que le tuyau conserve sa souplesse sur une large gamme de températures allant par exemple de -40°C à 140°C.

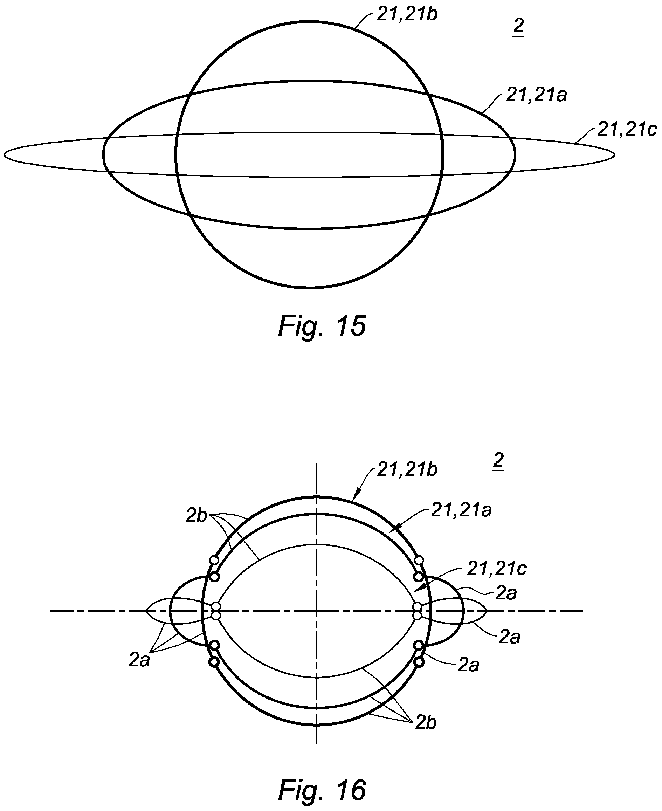

Selon un mode de réalisation présenté sur la figure 16, le tuyau 2 peut comprendre deux portions souples 2a et deux portions rigides 2b, longitudinales. Les deux portions souples 2a sont diamétralement opposées l'une par rapport à l'autre et les deux portions rigides 2b sont diamétralement opposées l'une par rapport à l'autre.

Le tuyau 2 est destiné à être installé dans un volume de sécurité d'un véhicule. En d'autres termes, le tuyau 2 est destiné à être installé dans un volume limité en partie supérieure par la peau intérieure d'un capot C du véhicule et en partie inférieure par une surface supérieure du moteur et des organes rigides qui y sont attachés distante de l'ordre de 60 millimètres pour les spécifications actuelles demandées dans l'automobile.

Le tuyau 2 présente une section 21 schématiquement représentée sur les figures 15 et 16. Tel que cela sera expliqué ultérieurement, la section 21 est conçue pour être déformée entre une section de repos 21a, une section fonctionnelle 21b et une section déformée 21c.

Selon un mode de réalisation ici représenté sur la figure 15, la section de repos 21a est sensiblement elliptique.

Selon un autre mode de réalisation, présenté sur la figure 16, le tuyau présente une section de repos 21a formée par la jonction des arcs successifs des portions souples 2a et des portions rigides 2b.

Le dispositif 1 comprend, en outre, des moyens de conformation du tuyau 2 et des moyens de déverrouillage qui intègrent un organe de déclenchement.

Selon un premier mode de réalisation présenté sur les figures 1 et 2, les moyens de conformation comprennent deux demi-colliers 3. Chaque demi-collier 3 présente une première extrémité 39a munie d'une languette 33 et une deuxième extrémité 39b munie d'un réceptacle 31.

Selon le premier mode de réalisation, chaque réceptacle 31 présente deux empreintes 32. De même, chaque languette 33 présente deux protubérances 34 adaptées pour coopérer chacune avec une empreinte 32 correspondante.

En outre, chaque demi-collier 3 présente une charnière 35 permettant la déformation élastique de chaque demi-collier 3 entre une position libre et une position de contrainte. La charnière 35 est adaptée pour contribuer au passage de chaque demi-collier 3 de la position de contrainte à la position libre.

De plus, chaque demi-collier 3 présente une rainure 37 dont la fonction sera présentée ultérieurement.

Comme on peut l'observer sur les figures 1 et 2, selon le premier mode de réalisation, le dispositif 1 comprend aussi un demi-anneau 4.

Le demi-anneau 4 présente deux bras 41. Selon le premier mode de réalisation, l'organe de déclenchement comprend un bouton de commande 42 situé entre les deux bras 41. Le bouton de commande 42 est lié à chaque bras 41 par une charnière 45. En outre, une extrémité libre de chaque bras 41 présente une lamelle 46. Selon le mode de réalisation ici présenté, chaque lamelle 46 présente deux protubérances similaires aux protubérances 34 de chaque languette 33.

A l'usage, les deux demi-colliers 3 sont assemblés, de manière amovible, autour du tuyau 2. L'assemblage des deux demi-colliers 3 est réalisé en introduisant la languette 33 de chaque demi-collier 3 dans le réceptacle 31 de l'autre demi-collier 3.

En étant ainsi assemblés, les deux demi-colliers 3 contraignent le tuyau 2 à adopter la section fonctionnelle 21 b sensiblement circulaire (telle que représentée sur les figures 15 et 16).

Le demi-anneau 4 permet de verrouiller l'assemblage des deux demi-colliers 3. Le demi-anneau 4 est positionné dans la rainure 37 de l'un des deux demi-colliers 3. Les lamelles 46 sont chacune introduites dans un réceptacle 31 correspondant. Les lamelles 46 permettent de verrouiller la liaison entre chaque réceptacle 31 et chaque languette 33 correspondante.

Ainsi assemblés, en position de contrainte, les deux demi-colliers 3 et le demi-anneau 4 contraignent le tuyau 2 à adopter et à conserver la section fonctionnelle 21b. Comme on peut l'observer sur les figures 15 et 16, la section fonctionnelle 21b est sensiblement circulaire. Cette géométrie permet au tuyau 2 de résister aux efforts dus à une dépression interne, et permet de maximiser le flux d'air alimentant un moteur du véhicule.

En cas de collision du véhicule, sur lequel est installé le dispositif 1, avec un piéton, le capot du véhicule vient exercer une pression sur le bouton de commande 42. Les articulations 45 permettent que la pression exercée sur le bouton de commande 42 engendre le désengagement des lamelles 46 des réceptacles 31. Ainsi, la liaison de chaque languette 33 avec un réceptacle 31 correspondant est déverrouillée. La charnière 35 de chaque demi-collier 3 exerce alors un effort élastique qui permet de séparer les deux demi-colliers 3. En conséquence, le tuyau peut librement se déformer, sous l'action du capot, pour adopter la section déformée 21c (représentée sur les figures 15 et 16).

Comme on peut le remarquer, selon le mode de réalisation présenté sur la figure 16, dans le cas d'un tuyau 2 comprenant deux portions souples 2a et deux portions rigides 2b, en cas de collision les deux portions souples 2a se déforment jusqu'à ce que les deux portions rigides 2b entrent en contact l'une avec l'autre.

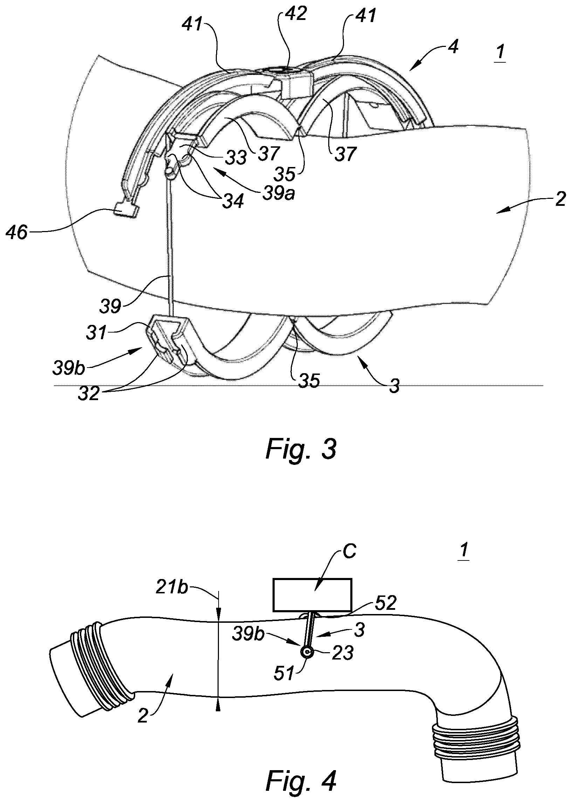

On peut se reporter à la figure 3 pour apprécier un deuxième mode de réalisation du dispositif 1. Il est précisé que le deuxième mode de réalisation du dispositif 1 reprend l'ensemble des caractéristiques du premier mode de réalisation auxquelles est adjoint un élément supplémentaire. En effet, comme on peut l'observer sur la figure 3, selon le deuxième mode de réalisation, le dispositif 1 comprend deux cordons souples 39 (un seul cordon souple 39 étant visible sur la figure 3). Chaque cordon souple relie la languette 33 d'un demi-collier 3 au réceptacle 34 de l'autre demi-collier 3. Ainsi, lorsque les moyens de déverrouillage libèrent les deux demi-colliers 3, Les cordons souples 39 permettent aux deux demi-colliers 3 de rester solidaires du tuyau 2. En d'autres termes, en cas de libération, les cordons souples 39 permettent aux deux demi-colliers 3 de rester accrochés au tuyau 2, pour ne pas tomber dans le compartiment moteur du véhicule.

Les figures 4 à 6 présentent un troisième mode de réalisation du dispositif 1.

Selon le troisième mode de réalisation, les moyens de conformation comprennent un demi-collier 3. Le demi-collier 3 peut présenter une forme générale en arc de cercle. Le demi-collier 3 comprend deux extrémités 39a-39b présentant chacune un crochet 51.

Selon le troisième mode de réalisation, chaque crochet 51 est configuré pour accrocher un téton 23 du tuyau 2, pour permettre le maintien du demi-collier 3.

Selon le troisième mode de réalisation, l'organe de déclenchement comprend une surface en biseau 52 du demi-collier 3.

La surface en biseau 52 est positionnée entre les deux crochets 51.

A l'usage, selon le troisième mode de réalisation, le demi-collier 3 est positionné autour de la section 21 du tuyau 2, pour contraindre le tuyau 2 à adopter la section fonctionnelle 21b.

Le demi-collier 3 est maintenu sur le tuyau 2 en accrochant chaque crochet 51 à un téton 23 respectif du tuyau 2.

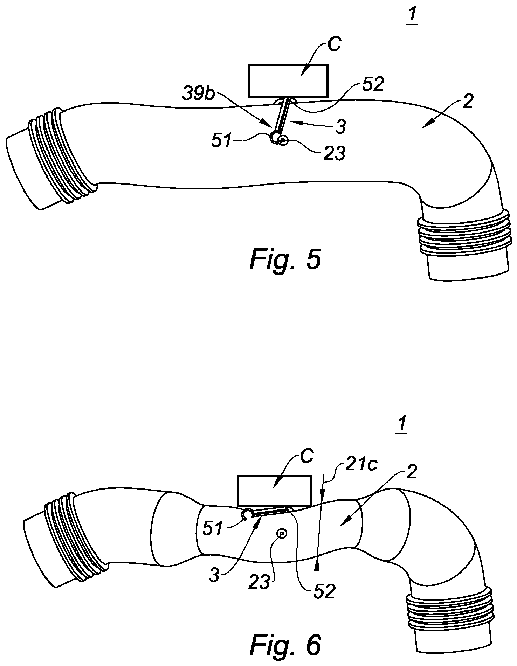

Comme on peut le voir sur les figures 5 et 6, lors de l'exercice d'un effort par le capot C sur la surface en biseau 52, le demi-collier 3 pivote et les crochets 51 sont éloignés des tétons 23. Ainsi, le demi-collier 3 ne conforme plus le tuyau 2 qui est libre d'adopter une section déformée 21c.

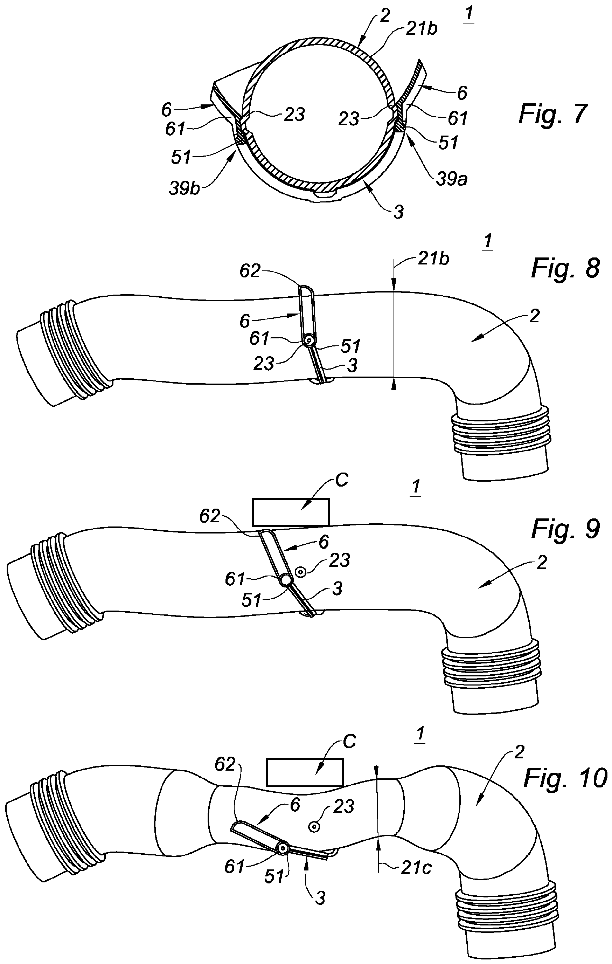

Les figures 7, 8, 9 et 10 présentent un quatrième mode de réalisation du dispositif 1. Selon le quatrième mode de réalisation, les moyens de conformation comprennent le demi-collier 3 présentant les deux crochets 51 configurés pour accrocher deux tétons 23 respectifs du tuyau 2.

De plus, selon le quatrième mode de réalisation, l'organe de déclenchement comprend deux bras 6. Chaque bras 6 présente une première extrémité 61 liée à un crochet 51 respectif. En outre, chaque bras 6 présente une deuxième extrémité en biseau 62.

Comme on peut l'observer sur la figure 7, les bras 6 s'étendent radialement par rapport au tuyau 2, dans le prolongement du demi-collier 3. Comme on peut le voir sur la figure 8, chaque bras 6 présente une cote suffisante pour que l'extrémité en biseau 62 soit positionnée à distance du tuyau 2.

A l'usage, selon le quatrième mode de réalisation, le demi-collier 3 est positionné autour de la section 21 du tuyau 2, pour contraindre le tuyau 2 à adopter la section fonctionnelle 21b.

Le demi-collier 3 est maintenu sur le tuyau 2 en accrochant chaque crochet 51 à un téton 23 respectif du tuyau 2.

Tel que représenté sur les figures 9 et 10, lors de l'exercice d'un effort du capot C sur les extrémités en biseau 62, les bras 6 pivotent. Le déplacement des bras 6 provoque le pivot du demi-collier 3. Ainsi, les crochets 51 sont éloignés des tétons 23 et le demi-collier 3 ne conforme plus le tuyau 2 qui est libre d'adopter sa section déformée 21c.

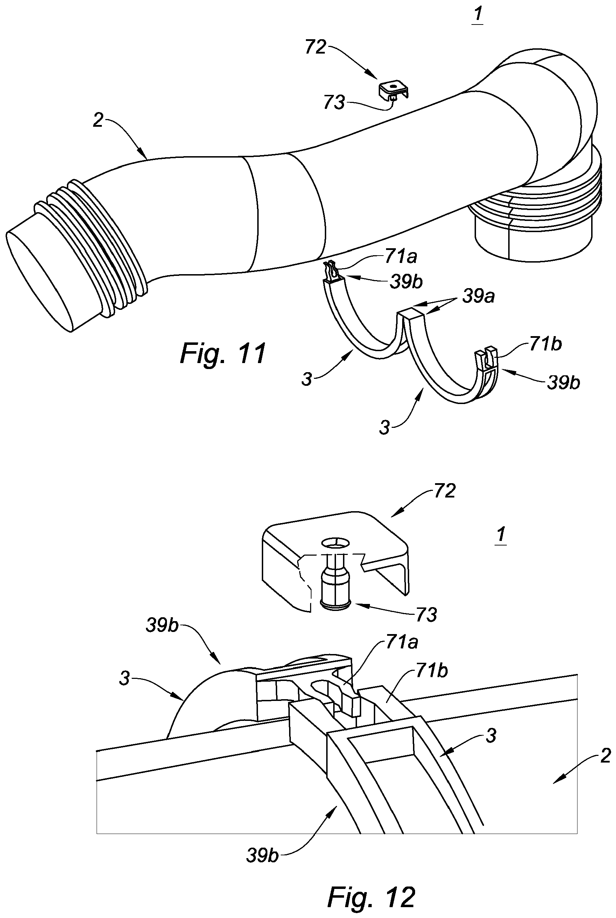

Les figures 11 et 12 présentent un cinquième mode de réalisation.

Selon le cinquième mode de réalisation, les moyens de conformation comprennent deux demi-colliers 3 articulés l'un à l'autre chacun par une première extrémité 39a et présentant chacun une deuxième extrémité 39b libre.

D'une manière avantageuse, l'articulation se comporte comme un ressort tendant à écarter les deux demi-colliers 3, pour faire passer les deux demi-colliers 3 articulés d'une position de contrainte à une position libre.

Les deuxièmes extrémités 39b libres des deux demi-colliers 3 présentent respectivement une fourche mâle 71a et une fourche femelle 71b, adaptées pour être accouplées l'une à l'autre.

Selon le mode de réalisation ici présenté, chaque fourche 71a-71b présente deux tiges entre lesquelles est ménagé un espace. La fourche mâle 71a et la fourche femelle 71b sont conçues pour être accouplées.

Selon le cinquième mode de réalisation, l'organe de commande comprend un pion 72 représenté en détails sur la figure 12. Le pion 72 comprend un axe 73. L'axe 73 présente deux extrémités et un diamètre évolutif. Une première extrémité de l'axe 73 est fixée au pion 72 et une seconde extrémité de l'axe 73 est libre. Selon le cinquième mode de réalisation le diamètre de l'axe 73 à proximité de sa deuxième extrémité est supérieur au diamètre de l'axe 73 à proximité de sa première extrémité.

A l'usage, selon le cinquième mode de réalisation, les deux demi-colliers 3 articulés sont positionnés autour du tuyau 2 pour le contraindre à adopter la section fonctionnelle 21b. Les deux demi-colliers 3 sont verrouillés autour du tuyau 2 en introduisant la fourche mâle 71a dans la fourche femelle 71b, et en positionnant l'axe 73 du pion 72 dans l'espace entre les deux tiges de la fourche mâle 71a (tel que représenté sur la figure 12).

D'une manière avantageuse, le diamètre de l'axe 73, à proximité de sa deuxième extrémité, permet d'exercer un effort radial sur les tiges de la fourche mâle 71a pour la maintenir dans la fourche femelle 71b.

Lorsque le capot exerce un effort sur le pion 72, l'axe 73 du pion 72 coulisse entre les tiges de la fourche mâle 71a. Le diamètre de l'axe 73 à proximité de sa première extrémité est réduit et n'exerce pas d'effort radial sur les tiges de la fourche mâle 71a. En conséquence, la fourche mâle 71a et la fourche femelle 71b peuvent se séparer. Les deux demi-colliers 3 articulés sont alors ouverts et ne contraignent plus le tuyau qui peut adopter sa section déformée 21c.

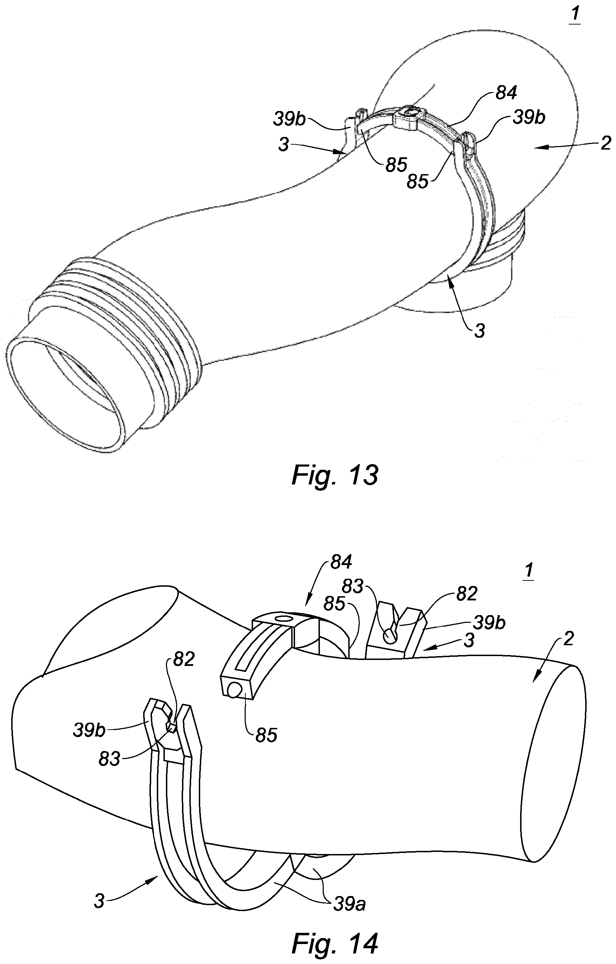

Les figures 13 et 14 présentent un sixième mode de réalisation.

Selon le sixième mode de réalisation, les moyens de conformation comprennent deux demi-colliers 3 articulés l'un à l'autre chacun par une première extrémité 39a et présentant chacun une deuxième extrémité 39b libre.

De plus, comme on peut l'observer sur la figure 14, l'articulation se comporte comme un ressort tendant à écarter les deux demi-colliers 3, pour faire passer les deux demi-colliers 3 articulés d'une position de contrainte à une position libre.

Chaque deuxième extrémité 39b des deux demi-colliers 3 comprend une fente 82 débouchant sur un perçage 83.

L'organe de déclenchement comprend un sabot 84 en arc de cercle. Le sabot 84 présente deux extrémités 85. Chaque extrémité 85 du sabot 84 présente une tige configurée pour coulisser dans la fente 82 et le perçage 83. D'une manière préférentielle, la tige de chaque extrémité 85 du sabot 84 présente un diamètre substantiellement proche d'une largeur de chaque fente 82. Ainsi, la tige de chaque extrémité 85 ne peut coulisser dans une fente 82 que sous l'exercice d'un effort extérieur. De plus, chaque perçage 83 présente un diamètre supérieur au diamètre de la tige de chaque extrémité 85, pour que la tige de chaque extrémité 85 puisse être aisément dégagée de chaque perçage 83.

A l'usage, selon le sixième mode de réalisation, les deux demi-colliers 3 articulés sont positionnés autour du tuyau 2 pour le contraindre à adopter sa section fonctionnelle 21b.

Chaque extrémité 85 du sabot 84 est positionnée dans une fente 82. De la sorte, le sabot 84 verrouille les deux demi-colliers 3 articulés dans une position de contrainte autour du tuyau 2.

Lorsque le capot exerce un effort sur le sabot 84, la tige de chaque extrémité 85 du sabot 84 coulisse dans une fente 82 respective et pénètre dans le perçage 83. Ainsi, le sabot ne verrouille plus les deux demi-colliers 3 articulés, la tige de chaque extrémité 85 peut être dégagée de chaque perçage 83. Sous l'action de l'articulation 88, les deux demi-colliers 3 s'écartent et le tuyau 2 peut adopter sa section déformée 21c.

Ainsi, l'invention fournit un dispositif 1 d'admission d'air qui peut être positionné dans le volume de sécurité en résistant à une dépression intérieure, en permettant une admission d'air optimale du moteur et en garantissant la sécurité en cas de collision du véhicule avec un piéton.

Bien entendu, l'invention ne se limite pas aux seules formes d'exécution représentées ci-dessus, mais elle embrasse au contraire toutes les formes de réalisation.

## Revendications

1. Dispositif (1) d'alimentation d'air moteur pour un véhicule qui comprend un moteur et un capot (C) moteur entre lesquels est interposé un volume de sécurité, le dispositif (1) comprenant (i) au moins un tuyau (2), au moins partiellement souple, qui présente une section de repos (21a), (ii) des moyens de conformation du tuyau (2) configurés pour contraindre le tuyau (2) à adopter une section fonctionnelle (21b), différente de la section de repos (21a), qui permet l'aspiration d'air dans le tuyau (2), et (iii) des moyens de déverrouillage conçus pour libérer les moyens de conformation par un contact lors d'un déplacement du capot (C) dans le volume de sécurité, pour permettre au tuyau d'adopter une section déformée (21c) dans laquelle le tuyau (2) n'empiète pas dans le volume de sécurité, les moyens de conformation présentant une section sensiblement circulaire permettant de contraindre le tuyau (2) à adopter la section fonctionnelle (21b) sensiblement circulaire, **caractérisé en ce que** les moyens de déverrouillage comprennent un organe de déclenchement configuré pour actionner les moyens de déverrouillage lors d'un contact avec le capot (C), **en ce que** les moyens de conformation comprennent au moins deux demi-colliers (3) configurés pour être assemblés l'un à l'autre et enserrer la section (21) du tuyau (2) pour la contraindre à adopter la section fonctionnelle (21b), chaque demi-collier (3) présentant une première extrémité (39a) munie d'une languette (33) et une deuxième extrémité (39b) munie d'un réceptacle (31), le réceptacle (31) d'un demi-collier (3) étant configuré pour recevoir la languette (33) d'un autre demi-collier (3), et **en ce que** les moyens de conformation comprennent au moins un demi-anneau (4) présentant deux bras (41), ledit demi-anneau (4) étant apte à verrouiller l'assemblage des deux demi-colliers (3).

2. Dispositif selon la revendication 1, **caractérisé en ce que** le tuyau (2) comprend au moins une portion rigide (2b).

3. Dispositif (1) selon l'une des revendications 1 à 2, **caractérisé en ce que** chaque languette (33) présente au moins une protubérance (34) adaptée pour coopérer avec une empreinte (32) correspondante de chaque réceptacle (31).

4. Dispositif (1) selon l'une des revendications 1 à 3, **caractérisé en ce que** chaque demi-collier (3) est déformable élastiquement entre une position libre et une position de contrainte dans laquelle chaque demi-collier (3) enserre une portion de la section du tuyau (2) pour la contraindre à adopter la section fonctionnelle (21b).

5. Dispositif (1) selon l'une des revendications 1 à 4, **caractérisé en ce que** chaque bras (41) de chaque demi-anneau (4) présente au moins une lamelle (46) configurée pour être introduite dans un réceptacle (31) pour y maintenir verrouillée une languette (33).

6. Dispositif (1) selon l'une des revendications 1 à 5, **caractérisé en ce que** l'organe de déclenchement comprend un bouton de commande (42) situé entre les deux bras (41) de chaque demi-anneau (4), articulé par rapport à chacun des deux bras (41) et permettant de libérer chaque demi-collier (3) pour permettre au tuyau (2) d'adopter la section déformée (21c).

7. Dispositif (1) selon l'une des revendications 1 à 6, **caractérisé en ce que** chaque demi-collier (3) présente une rainure (37) configurée pour recevoir un demi-anneau (4).

8. Dispositif selon l'une des revendications 1 à 7, **caractérisé en ce que** les moyens de conformation comprennent un cordon souple (39) configuré pour solidariser les moyens de conformation au tuyau (2).

## Patentansprüche

1. Motorluftzuführungsvorrichtung (1) für ein Fahrzeug, das einen Motor und eine Motorhaube (C) umfasst, zwischen denen ein Sicherheitsvolumen zwischengefügt ist, wobei die Vorrichtung (1) umfasst (i) mindestens ein mindestens teilweise nachgiebiges Rohr (2), das einen Ruhequerschnitt (21a) aufweist, (ii) Mittel zum Formen des Rohres (2), die dafür eingerichtet sind, das Rohr (2) dazu zu zwingen, einen sich vom Ruhequerschnitt (21a) unterscheidenden Funktionsquerschnitt (21b) anzunehmen, der das Ansaugen von Luft in das Rohr (2) ermöglicht, und (iii) Entriegelungsmittel, die dafür konzipiert sind, die Formungsmittel durch einen Kontakt bei einer Verschiebung der Haube (C) in das Sicherheitsvolumen freizugeben, um es dem Rohr zu ermöglichen, einen verformten Querschnitt (21c) anzunehmen, in dem das Rohr (2) nicht in das Sicherheitsvolumen eindringt, wobei die Formungsmittel einen im Wesentlichen kreisrunden Querschnitt aufweisen, der es ermöglicht, das Rohr (2) dazu zu zwingen, den im Wesentlichen kreisrunden Funktionsquerschnitt (21b) anzunehmen, **dadurch gekennzeichnet, dass** die Entriegelungsmittel ein Auslöseglied umfassen, das dafür eingerichtet ist, die Entriegelungsmittel bei einem Kontakt mit der Haube (C) zu betätigen, und dadurch, dass die Formungsmittel mindestens zwei Halbschellen (3) umfassen, die dafür eingerichtet sind, miteinander verbunden zu werden und den Querschnitt (21) des Rohres (2) zu umschließen, um dasselbe dazu zu zwingen, den Funktionsquerschnitt (21b) anzunehmen, wobei jede Halbschelle (3) ein erstes Ende (39a) aufweist, das mit einer Lasche (33) ausgestattet ist, und ein zweites Ende (39b), das mit einer Aufnahme (31) ausgestattet ist, wobei die Aufnahme (31) einer Halbschelle (3) dafür eingerichtet ist, die Lasche (33) einer anderen Halbschelle (3) aufzunehmen, und dadurch, dass die Formungsmittel mindestens einen Halbring (4) umfassen, der zwei Schenkel (41) aufweist, wobei der Halbring (4) in der Lage ist, die Verbindung der zwei Halbschellen (3) zu verriegeln.

2. Vorrichtung nach Anspruch 1, **dadurch gekennzeichnet, dass** das Rohr (2) mindestens einen starren Abschnitt (2b) umfasst.

3. Vorrichtung (1) nach einem der Ansprüche 1 bis 2, **dadurch gekennzeichnet, dass** jede Lasche (33) mindestens einen Vorsprung (34) aufweist, der dafür ausgebildet ist, mit einer entsprechenden Vertiefung (32) jeder Aufnahme (31) zusammenzuwirken.

4. Vorrichtung (1) nach einem der Ansprüche 1 bis 3, **dadurch gekennzeichnet, dass** jede Halbschelle (3) elastisch verformbar ist zwischen einer freien Stellung und einer Zwangsstellung, in der jede Halbschelle (3) einen Abschnitt des Querschnitts des Rohres (2) umschließt, um dasselbe dazu zu zwingen, den Funktionsquerschnitt (21b) anzunehmen.

5. Vorrichtung (1) nach einem der Ansprüche 1 bis 4, **dadurch gekennzeichnet, dass** jeder Schenkel (41) jedes Halbrings (4) mindestens eine Lamelle (46) aufweist, die dafür eingerichtet ist, in eine Aufnahme (31) eingeführt zu werden, um dort eine Lasche (33) verriegelt zu halten.

6. Vorrichtung (1) nach einem der Ansprüche 1 bis 5, **dadurch gekennzeichnet, dass** das Auslöseglied einen Bedienknopf (42) umfasst, der zwischen den zwei Schenkeln (41) jedes Halbrings (4) liegt, der in Bezug auf jeden der zwei Schenkel (41) angelenkt ist und es ermöglicht, jede Halbschelle (3) freizugeben, um es dem Rohr (2) zu ermöglichen, den verformten Querschnitt (21c) anzunehmen.

7. Vorrichtung (1) nach einem der Ansprüche 1 bis 6, **dadurch gekennzeichnet, dass** jede Halbschelle (3) eine Nut (37) aufweist, die dafür eingerichtet ist, einen Halbring (4) aufzunehmen.

8. Vorrichtung nach einem der Ansprüche 1 bis 7, **dadurch gekennzeichnet, dass** die Formungsmittel ein nachgiebiges Band (39) umfassen, das dafür eingerichtet ist, die Formungsmittel fest mit dem Rohr (2) zu verbinden.

## Claims

1. An engine air induction device (1) for a vehicle which comprises an engine and an engine hood (C) between which a safety volume is interposed, the device (1) comprising (i) at least one pipe (2), at least partially flexible, which has a rest section (21a), (ii) means for conforming the pipe (2) configured to constrain the pipe (2) to adopt a functional section (21b), different from the rest section (21a), which enables air suction into the pipe (2), and (iii) unlocking means designed to release the conformation means by a contact during a displacement of the hood (C) in the safety volume, to enable the pipe to adopt a deformed section (21c) in which the pipe (2) does not interfere in the safety volume, the conformation means having a substantially circular section allowing constraining the pipe (2) to adopt the substantially circular functional section (21b), **characterized in that** the unlocking means comprise a triggering member configured to actuate the unlocking means during a contact with the hood (C), **in that** the conformation means comprise at least two half-collars (3) configured to be assembled to each other and clasp the section (21) of the pipe (2) to constrain it to adopt the functional section (21b), each half-collar (3) having a first end (39a) provided with a tab (33) and a second end (39b) provided with a receptacle (31), the receptacle (31) of a half-collar (3) being configured to receive the tab (33) of another half-collar (3), and **in that** the conformation means comprise at least one half-ring (4) having two arms (41), said half-ring (4) being capable of locking the assembly of the two half-collars (3).

2. The device according to claim 1, **characterized in that** the pipe (2) comprises at least one rigid portion (2b).

3. The device (1) according to any of claims 1 to 2, **characterized in that** each tab (33) has at least one protuberance (34) adapted to cooperate with a corresponding imprint (32) of each receptacle (31).

4. The device (1) according to any of claims 1 to 3, **characterized in that** each half-collar (3) is elastically deformable between a free position and a stressed position in which each half-collar (3) clasps a portion of the section of the pipe (2) to constraint it to adopt the functional section (21b).

5. The device (1) according to any of claims 1 to 4, **characterized in that** each arm (41) of each half-ring (4) has at least one blade (46) configured to be introduced into a receptacle (31) to maintain a tab (33) locked therein.

6. The device (1) according to any of claims 1 to 5, **characterized in that** the triggering member comprises a control button (42) located between the two arms (41) of each half-ring (4), hinged relative to each of the two arms (41) and allowing releasing each half-collar (3) to enable the pipe (2) to adopt the deformed section (21c).

7. The device (1) according to any of claims 1 to 6, **characterized in that** each half-collar (3) has a groove (37) configured to receive a half-ring (4).

8. The device (1) according to any of claims 1 to 7, **characterized in that** the conformation means comprise a flexible cord (39) configured to secure the conformation means to the pipe (2).
